# EUROPEAN PATENT SPECIFICATION

(11) **EP 1 356 575 B1**
(45) Date of publication and mention of the grant of the patent: **02.05.2007**
(21) Application number: 02714806.3
(22) Date of filing: 01.02.2002
(51) Int. Cl.: H02M 1/08

(54) **ISOLATED DRIVE CIRCUITRY USED IN SWITCH-MODE POWER CONVERTERS**
ISOLIERTE TREIBERSCHALTUNGSANORDNUNG ZUR VERWENDUNG IN LEISTUNGSSCHALTREGLERN
CIRCUITS DE COMMANDE ISOLES UTILISES DANS DES CONVERTISSEURS DE SECTEUR EN MODE COMMUTATION

(30) Priority: 01.02.2001 US 265714 P; 01.02.2002 US 61189
(43) Date of publication of application: 29.10.2003
(73) Proprietor: Power-One, Inc., Camarillo, California 93012 (US)
(72) Inventor: BRKOVIC, Milivoje, S., Carlsbad, CA 92009 (US)
(74) Representative: Beresford, Keith Denis Lewis
(86) International application number: PCT/US2002/002745
(87) International publication number: WO 2002/061926

(56) References cited:
- EP-A- 0 957 568
- WO-A-93/19516
- DE-A- 4 035 969
- DE-C- 4 327 073
- US-A- 4 591 964
- US-A- 5 198 969
- US-A- 5 353 212
- US-A- 5 880 939
- PATENT ABSTRACTS OF JAPAN vol. 007, no. 247 (E-208), 2 November 1983 (1983-11-02) & JP 58 136137 A (HITACHI LTD), 13 August 1983 (1983-08-13)

## Description

### FIELD OF THE INVENTION

This invention relates generally to switch-mode power converters and more particularly it provides a simple drive circuit with an enable function providing isolation and having high performance in topologies using synchronous rectification.

### BACKGROUD DISCUSSION

A switch-mode power converter is a circuit that uses an inductor, a transformer, or a capacitor, or some combination, as energy storage elements to transfer energy from an input source to an output load in discrete pulses. Additional circuitry is added to maintain a constant voltage within the load limits of the circuit. The basic circuit can be configured to step up (boost), step down (buck), or invert output voltage with respect to input voltage. Using a transformer allows the output voltage to be electrically isolated from the input voltage.

Switch-mode converters have changed very little over the past 15 years, most using Schottky diodes to rectify their output. However, newer challenges in the industry for dc/dc power supply designers demand lower voltages required by digital circuits, and also higher frequencies. Since converters using Schottky diodes for rectification experience a large forward voltage drop relative to the output voltage, their efficiency is generally relatively low. Lower efficiencies result in more dissipated heat that has to be removed using a heat sink, which takes up space. A dramatic increase in converter efficiency has been realized by replacing the Schottky diodes with "synchronous rectifiers" configured in practice with MOSFET transistors. Synchronous rectifiers are not new, but they have previously been too expensive to justify, primarily due to high ON resistance. However, as costs fall and performance improves, synchronous rectifiers have quickly become a viable component, especially for low voltage converters.

Using self-driven synchronous rectifiers in various converter topologies is very attractive and popular because there is no need for additional isolation between drive signals. It has the advantage of simplicity. However, it has the disadvantage of cross conduction between synchronous rectifiers and primary side switches, as well as reverse recovery current of the parasitic anti-parallel diode of the MOSFET used for synchronous rectification. In order to minimize these shoot-through currents, an inductance (or saturable inductor) is usually placed in series with the synchronous rectifier. While this may be a solution for lower switching frequencies, for example, 100 kHz - 200 kHz, it is not suitable for higher switching frequencies (200 kHz and above). Especially at switching frequencies of 300 - 400 kHz this is not an optimum solution. The reason for this is that increased inductance in series with a synchronous rectifier reduces the effective duty cycle on the secondary side of the power transformer due to slower di/dt of the secondary current. As a result, more voltage head-room is required in the power transformer implying a smaller effective turns ratio and consequently a lower efficiency. A second reason why self-driven synchronous rectification is not suitable for higher switching frequencies is the potential loss due to reverse recovery current in the body diode of the synchronous rectifiers (MOSFETs) and increased turn-on current in the primary side switches (usually MOSFETs).

A previous improvement has been to use direct drive for synchronous rectifiers with well controlled timing between drive signals for the main switches (primary side) and synchronous rectifiers (secondary side). This solution thus allows for very efficient operation of the synchronous rectifiers even at high switching frequencies. Yet another benefit of direct driven synchronous rectifiers is that the drive voltage (gate to source) is constant and independent of input voltage, which further improves efficiency over a wide input voltage range.

An example of the above prior art is set forth in U.S. patent 5,907,481. However, the invention in this patent provides only signals for drivers for the primary side switches and uses additional logic for delaying drive waveforms (R-C-D networks and logic gates). The '481 apparatus uses an isolation drive transformer for a logic signal only to control operation of the primary switches. It does not use a drive transformer to power the primary switches but rather uses a separate circuit to provide power and delays.

It is necessary to provide delays between drive signals for primary side switches and secondary side switches (synchronous rectifiers) in order to avoid cross conduction (simultaneous conduction which would result in a short circuit). When power converters are operated at lower switching frequencies (for example, 100 kHz), cross conduction of the switches can be acceptable since the percentage of the time during which cross conduction occurs relative to the switching period is small (typically about 40ns/10µs). Also, a transformer designed to operate at lower frequencies will have a larger leakage inductance, which will reduce cross conduction currents. In the case of higher switching frequencies (above 100 kHz), the cross conduction ratio becomes more unacceptable (about 40ns/2µs for a 500 kHz switching frequency). Also for higher switching frequencies, the leakage inductance in the transformer as well as in the entire power stage should be minimized for higher efficiency. Consequently, currents due to cross conduction time can become significant and degrade overall converter efficiency and increase heating of the power components significantly.

DE-A-4327073 describes a chopper circuit for the electrically insulated transmission of bipolar measurement currents and arranged such that a direct current at an input is chopped and transmitted via a push-pull transformer to a synchronous rectifier circuit. The synchronous rectifier circuit comprises rectifiers controlled by the outputs of windings of a control transformer driven by an oscillator which also controls the chopper circuit.

EP-A-957568 describes a switching power source in which the output from a secondary winding is rectified using switching transistors controlled via the outputs from transformer windings.

According to an embodiment of the invention, one drive transformer is used for providing the proper delays in drive waveforms as well as power for driving primary switches, particularly high side switches in a half-bridge topology. The leakage inductance of the drive transformer is used to delay turn-on of the main switches (primary side) while turn-off is with no significant delay. The number of windings on the drive transformer is minimized and varies from three to four depending on where the switch conduction control circuit is referenced. In a half-bridge converter, having the control circuit (pulse width modulated (PWM) type, for example) referenced to the output of the converter, there are three windings: (1) for the control signal and providing proper waveforms for driving synchronous rectifiers; (2) for driving the bottom primary switch; and (3) for driving the top primary switch. If the control circuit is referenced to the input of the converter there are four windings: (1) for the control signal; (2) for providing proper waveforms for driving synchronous rectifiers; (3) for driving the bottom primary switch; and (4) for driving the top primary switch. It is an additional concern of the invention to provide means to enable/disable the module due to a condition sensed on either the primary (input) or secondary (output) side via a controller, which maybe located on either the primary or secondary side.

### BRIEF DESCRIPTION OF THE DRAWING

The objects, advantages and features of the invention will be more clearly perceived from the following detailed description, when read in conjunction with the accompanying drawing, in which:
Fig. 1 is a circuit diagram of an embodiment of the invention using a half-bridge converter with control and drive circuit referenced to the input side of the converter;
Fig. 2 shows the salient waveforms of embodiments of the invention, taken at several locations in the Fig. 1 circuit;
Fig. 3 shows the turn-on waveforms of the Fig. 1 circuit with reduced leakage inductance on one winding;
Fig. 4 shows the turn-off waveforms of the Fig.1 embodiment;
Fig. 5 is an alternative circuit embodiment of the invention with the feedback and control circuit referenced to the secondary (output) side;
Fig. 6 is a partial circuit diagram for a possible realization of a driver for the synchronous rectifiers of embodiments of the invention;
Fig. 7 is an alternative circuit diagram for a possible embodiment of a driver for the synchronous rectifiers of embodiments of the invention;
Fig. 8 is yet another partial circuit diagram for a possible realization of a driver for the synchronous rectifiers of embodiments of the invention;
Fig. 9 is a partial circuit diagram for a possible realization of drivers of the primary side switches with n- channel MOSFETs;
Fig. 10 is another partial circuit diagram for a possible realization of drivers of the primary side switches with bipolar transistors.
Figs. 11A and 11B is an alternative circuit embodiments of the invention to facilitate disabling the control circuit on the secondary side from the primary side;
Fig. 12 another alternative circuit embodiment of the invention to facilitate disabling the control circuit on the secondary side from the primary side via additional winding;
Fig. 13A is another circuit embodiment of the invention with a disable feature and the control circuit located on the input side of the converter; and
Fig. 13B shows means to disable the converter of Fig. 13A from a condition sensed on the output side.

### DETAILED DESCRIPTION OF THE PREFERRED EMBODIMENTS

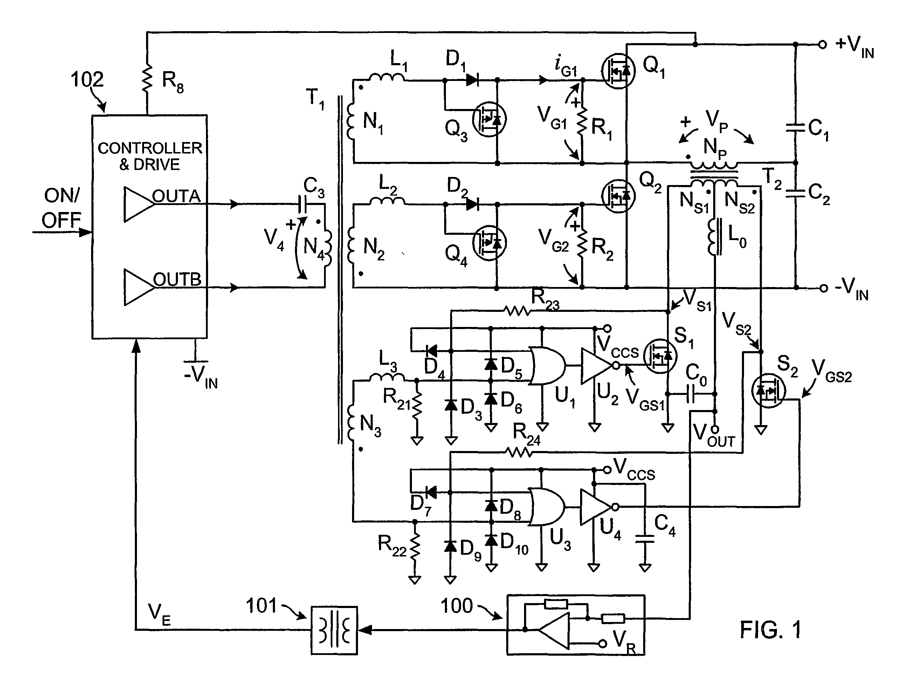

With reference now to Fig. 1, there is shown an embodiment of the invention using a half-bridge converter. Primary switches Q₁, Q₂ (also called primary controllable power switches), synchronous rectifiers S₁ and S₂, capacitors C₁, C₂ and C₀, power isolation transformer T₂ and inductor L₀ form a half-bridge dc-to-dc converter. The invention could also be embodied in other topologies including ac-to-dc, dc-to-ac and others. Input voltage V_{IN} is split with capacitors C₁ and C₂. One side of primary winding N_{P} of transformer T₂ is connected to the common connection of capacitors C₁ and C₂ while the second end is connected to the common point of switches Q₁ and Q₂. Two secondary windings N_{S1} and N_{S2} are preferably identical and are connected in series. The common point of these windings N_{S1} and N_{S2} is connected to one end of output inductor L₀, and the second end of inductor L₀ is connected to capacitor C₀ that is connected across the output of the converter. The second end of winding N_{S1} is connected to synchronous rectifier (switch) S₁ while the second end of winding N_{S2} is connected to synchronous rectifier (switch) S₂. The polarity of the windings of transformer T₂ is chosen such that when switch Q₁ is on, synchronous rectifier S₁ is on and S₂ is off. In contrast, when switch Q₂ is on, synchronous rectifier S₁ is off and S₂ is on. When both Q₁ and Q₂ are off, S₁ and S₂ are both on. Primary switches Q₁ and Q₂ are both exemplified as MOSFETs, but may also be realized as IGBTs (isolated gate bipolar transistors). This particular embodiment is explained as a hard switching half-bridge converter with split secondary windings. The invention is also applicable to derivatives of a half-bridge converter, such as but not limited to, a half bridge converter with a single secondary winding employing a current doubler on the output.

Output voltage V_{OUT} is compared with reference voltage V_{R} in block 100, which is typically an error amplifier. The output of block 100 is fed into isolation circuit (usually an opto-coupler or isolation transformer) 101 and error signal V_{E} is fed into block 102. Controller and drive block 102 contains switch conduction control circuitry that comprises a feedback and controller (PWM type, for example), two driver stages generating out-of-phase outputs OUTA and OUTB, and ON/OFF logic. This block can contain additional protection features very often found in converters, but they are not relevant for the purpose of the present description, and are thus omitted. Driver outputs OUTA and OUTB are capable of driving switches Q₁ and Q₂ as well as drive transformer T₁. Note that in Fig. 1, controller 102 and OUTA and OUTB drivers are referenced to -V_{IN}, and therefore to the input of the converter.

Drive transformer T₁ has four windings N₁, N₂, N₃ and N₄. Winding N₄ is driven from controller 102 via OUTA and OUTB and capacitor C₃, in series with winding N₄, is a DC blocking capacitor. Winding N₁ is connected at one end to the source of transistor Q₁ and the second end is connected to the gate of Q₁ via series diode D₁. Transistor (also called control switch) Q₃, shown as a p-channel MOSFET, is connected across the gate and source of Q₁ with its gate connected to the anode of diode D₁. Resistor R₁ is used to increase the noise immunity of transistor Q₁ when the voltage across winding N₁ is zero. Similarly, winding N₂ is connected with one end to the source of transistor Q₂ and the second end is connected to gate of transistor Q₂ via series diode D₂. Transistor Q₄, also shown as a p-channel MOSFET, is connected across the gate and source of Q₂ with its gate connected to anode of diode D₂. Resistor R₂ is used to increase the noise immunity of Q₂ when voltage across winding N₂ is zero.

Winding N₃ is connected to the drive circuitry for synchronous rectifiers S₁ and S₂. The ends of winding N₃ are connected via respective resistors R₂₁ and R₂₂ to the secondary side ground and to one input of two input logic OR gates U₁ and U₃. It is assumed that each input of gates U₁ and U₃ has protection diodes from ground to input and from input to supply voltage V_{CCS}. If logic gates without these diodes are used, than external diodes need to be added for proper operation of the circuit (as in Fig. 1, external diodes D₃-D₁₀). Supply voltage V_{CCS} is usually generated from the windings of power transformer T₂ or a separate bias circuit from the primary side with the proper isolation. Drive transformer T₁ can provide the necessary supply voltage Vccs via winding N₃ and diodes D₅, D₆, D₈ and D₁₀ as is described herein. The second input of logic gate U₁ is connected through resistor R₂₃ to the drain of synchronous rectifier S₁, while the second input of logic gate U₃ is connected through resistor R₂₄ to the drain of synchronous rectifier S₂. These two inputs provide break-before-make turn-on of both synchronous rectifiers S₁ and S₂ as is detailed herein. The voltage on the inputs of logic gates U₁ and U₃ is clamped to V_{CCS} with diodes D₄ and D₇, respectively. The output of logic gate U₁ is connected to the input of inverting driver U₂, which drives synchronous rectifier S₁, while the output of logic gate U₃ is connected to the input of inverting driver U₄, which drives synchronous rectifier S₂.

Inductances L₁ and L₂ are the leakage inductances associated with windings N₁ and N₂, respectively, of transformer T₁. These two inductances are carefully designed and made larger than usual in order to delay turn-on of switches Q₁ and Q₂. Adjusting inductances is relatively simple when the transformer windings are formed on a printed circuit board (PCB), especially on multi-layer PCBs. In addition, repeatability and control in manufacturing are excellent. Typical values for these inductances are approximately 100 nH and higher. They are designed so that one-fourth of the period of oscillation caused by the input capacitance of switches Q₁ and Q₂ and leakage inductances of the windings (L₁ and L₂) is longer than the turn-off time of the secondary synchronous rectifying switches S₁ and S₂.

The leakage inductance L₃ of winding N₃ of the drive transformer is not critical since winding N₃ is loaded with high impedance load, also taking into consideration the input capacitance of logic gates U₁ and U₃ (5pF-10pF being typical). Thus inductance L₃ will not have significant impact on the rising and falling edges of the voltage waveforms across winding N₃ and consequently will not add any additional delay in turning off synchronous rectifiers S₁ and S₂.

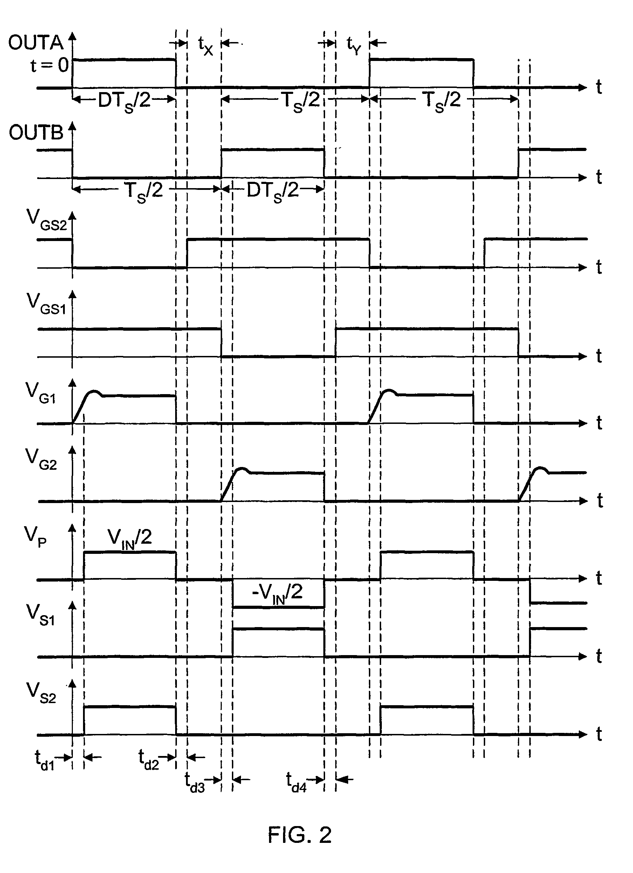

The salient waveforms are provided in Fig. 2 for circuit operation understanding. In these waveforms:
t_{d1} - time between turning-off synchronous rectifier S₂ and turning-on switch Q₁. This is determined by the leakage inductance L₁ of drive transformer T₁ and the input capacitance of primary switch Q₁.
t_{d2} - time delay between turning-off switch Q₁ and turning-on synchronous rectifier S₂. The drive voltage (V_{GS2}) of synchronous rectifier S₂ is applied when the voltage across S₂ (V_{S2}) is below the threshold of logic gate U₃. Resister R₂₄ and the input capacitance of logic gate U₃ provide fine tuning of the delay. During this time the output capacitance of S₂ is discharged with the output inductor current.
t_{d3} - time between turning-off synchronous rectifier S₁ and turning-on switch Q₂. It is determined by the leakage inductance L₂ of drive transformer T₁ and the input capacitance of primary switch Q₂. Usually, td₁ = td₃ in practice.
t_{d4} - time delay between turning-off switch Q₂ and turning-on synchronous rectifier S₁. The drive voltage for synchronous rectifier S₁ (V_{GS1}) is applied when the voltage across it, V_{S1}, reaches near zero value (threshold of logic gate U₁). Resistor R₂₃ and the input capacitance of logic gate U₁ provide fine tuning of this delay. The output capacitance of synchronous rectifier S₁ is discharged by the output inductor current during this time. Usually, td₂ ≈ td₄ in practice.

At t = 0, OUTA becomes high, while OUTB is low. The voltage across the windings of T₁ is positive. Note that the dot next to one end of each winding of T₁ is used for reference and is now positive with respect to other side of the winding. Since the voltage across winding N₃ is positive, the output of U₄ goes high causing turn-off of primary switch S₂ with minimum delay. Note that the end of winding N₃ that is connected to the input of logic gate U₁ is clamped with an internal diode to the negative voltage equal to the forward voltage drop of the diode. The output of inverting driver U₂ is low and synchronous rectifier S₁ is still on. At the same time, positive voltage is applied across winding N₁, diode D₁ becomes forward biased and the input capacitance of transistor Q₁ begins charging in a resonant manner via leakage inductance L₁ of winding N₁. At t = t_{d1}, gate voltage V_{G1} is positive and transistor Q₁ is fully on. Note that positive voltage across winding N₂ keeps transistor Q₂ off. The body diode of inverting driver Q₄ clamps negative voltage on the gate of Q₂ to near zero during time DT_{S}/2 while D₂ is reverse biased. Clamping negative voltage on the gate of Q₂ during the off time is desirable in order to reduce gate drive losses. Positive voltage is applied across all windings of transformer T₂ during the time following t_{d1} to the completion of DT_{S}/2. The voltage across synchronous rectifier S₂ is also positive and S₂ is off. The output inductor current is supplied through winding N_{S1} and synchronous rectifier S₁.

At t = DT_{S}/2, OUTA becomes low (OUTB is still low), winding N₄ is shorted and the voltages across the other three windings of T₁ are near zero. Transistor Q₃ is turned-on, diode D₁ is reverse biased, the input capacitance of transistor Q₁ is discharged very quickly via the ON resistance of Q₃ and gate voltage V_{G1} rapidly drops to zero resulting in the turn-off of Q₁. The current through output inductor L₀ splits between synchronous rectifier S₁ and the body diode of S₂, which as a consequence has shorted the windings of transformer T₂. As soon as voltage across synchronous rectifier S₂ drops down to the logic zero threshold of logic gate U₃, the output of U₃ goes low (since the input connected to winding N₃ is zero) and synchronous rectifier S₂ is turned-on via driver U₄ (time interval t_{d2}). Both synchronous rectifiers S₁ and S₂ are on during the rest of the half of the switching period (T_{S}/2) and voltages across the windings of transformers T₁ and T₂ are zero (time interval tₓ).

At t = T_{S}/2, OUTB goes high while OUTA is kept low and the voltage on the windings of T₁ becomes negative. Since the voltage across winding N₃ is negative, the voltage across resistor R₂₁ is positive and the output of logic gate U₁ goes high causing the output of driver U₂ to go low which turns-off synchronous rectifier S₁ with minimum delay. Note that the end of winding N₃ connected to the input of U₃ is clamped with an internal diode to the negative voltage equal to the forward voltage drop of the diode. Since both inputs of logic gate U₃ are at the low logic level, the output of U₃ is low, the output of driver U₄ is high and synchronous rectifier S₂ is still on. At the same time negative voltage is applied across winding N₂ (the end with no dot is more positive than the end with a dot), diode D₂ becomes forward biased and the input capacitance of transistor Q₂ starts to be charged in resonant manner via the leakage inductance L₂ of winding N₂. At t = Ts/2 + t_{d3}, voltage V_{G2} is high and transistor Q₂ is fully on. Note that the negative voltage across winding N₁ keeps transistor Q₁ off. The body diode of Q₃ clamps negative voltage across the gate of Q₁ to near zero, while diode D₁ is reverse biased. Clamping negative voltage on the gate of Q₁ during off-time is desirable in order to reduce gate drive losses. Positive voltage is applied across all windings of transformer T₂. The voltage across synchronous rectifier S₁ is also positive. During time T_{S}/2+DT_{S}/2 the output inductor current is supplied from the input through winding N_{S2} and synchronous rectifier S₂.

At t = T_{S}/2+DT_{S}/2, OUTB becomes low (OUTA is still low), winding N₄ is shorted and the voltages across the other three windings of T₁ are near zero. Transistor Q₄ is turned-on, diode D₂ is reverse biased, the input capacitance of primary switch Q₂ is discharged very quickly via the ON resistance of Q₄ and voltage V_{G2} rapidly drops to zero resulting in turn-off of transistor Q₁. The current through output inductor L₀ splits between synchronous rectifier S₂ and the body diode of S₁, which as a consequence has shorted the windings of transformer T₂. As soon as the voltage across S₁ drops down to the logic zero threshold of U₁, the output of U₁ goes low (since the input connected to resistor R₂₁ is zero) and synchronous rectifier S₁ is turned-on via driver U₂. The time interval between turning-off of Q₂ and turning-on S₁ is denoted as t_{d4}. Synchronous rectifiers S₁ and S₂ are on during the rest of the half of the switching period and the voltages across the windings of transformers T₁ and T₂ are zero (time interval ty). At the end of time interval t_{y}, operation of the converter of Fig. 1 repeats.

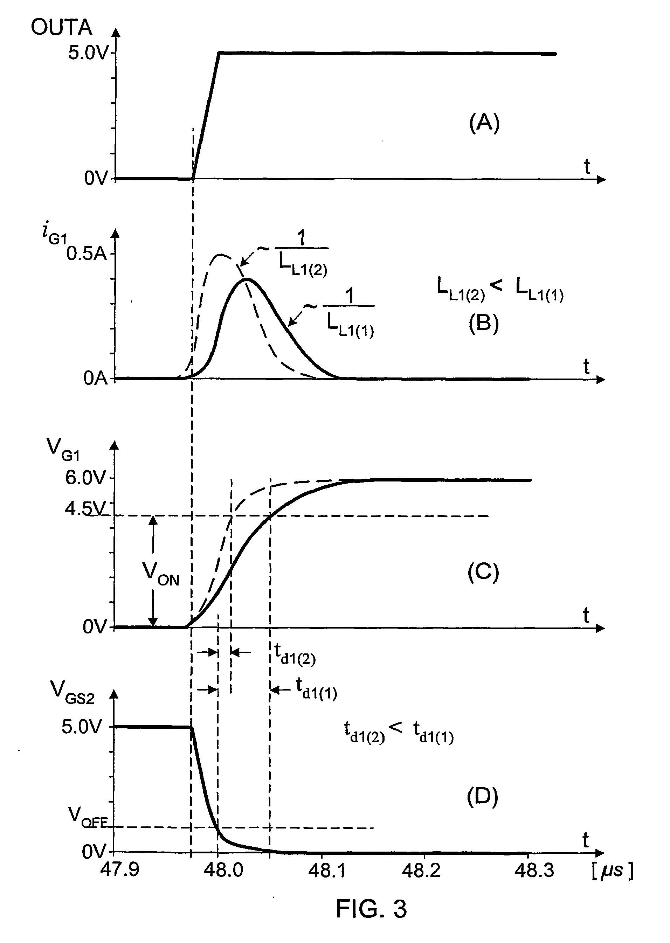

The turn-on waveforms of transistor Q₁ are shown in more detail in Fig. 3 for two different values of leakage inductance L₁ (L₁₍₁₎ and L₁₍₂₎) in order to explain the turn-on delay of primary switch Q₁ due to the finite rise time of the current in leakage inductance L₁ of winding N₁. The same consideration applies to primary switch Q₂. The lower value of leakage inductance L₁, denoted L₁₍₂₎, allows a higher peak current for charging input capacitance of transistor Q₁ and consequently a faster turn-on of Q₁ and shorter delay between the turning-off of S₂ and turning-on of Q₁. Note that V_{ON} in the (C) portion of Fig. 3 represents the voltage level of V_{G1} at which Q₁ is fully on, and t_{d1} (divided into t_{d1(1)} and t_{d(2)}) is the so called "dead-time" and represents the time during which both synchronous rectifier S₂ and primary switch Q₁ are off. This dead-time is necessary in order to avoid cross conduction of synchronous rectifier S₂ and primary switch Q₁ (and S₁ and Q₂). A dead-time that is too long is not desirable since during this time the body diode of S₂ (and equivalently, S₁) is carrying half of the output inductor current, thus decreasing the efficiency of the converter. If the dead-time is too short, that is, Q₁ is on before S₂ is turned-off, there will still be cross-conduction which will result in efficiency drop. Therefore, it is important to have a well controlled dead-time in order to achieve the highest efficiency. With proper design of leakage inductances and repeatability in manufacturing, dead-time is optimized for maximum efficiency.

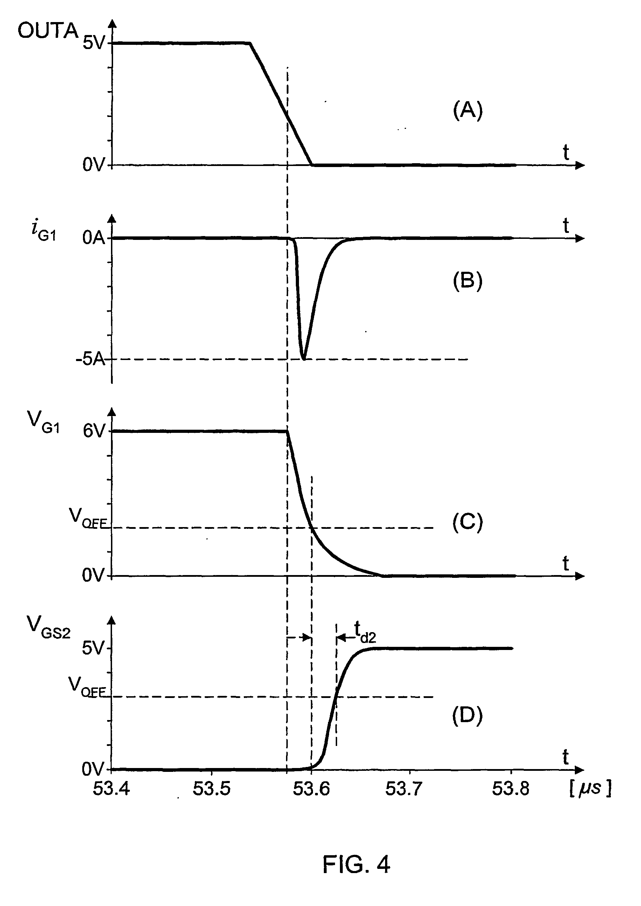

The turn-off waveforms for transistor Q₁ (that also apply for Q₂) are shown in further detail in Fig. 4. Since diode D₁ becomes reverse biased when OUTA goes low, the discharging current of the input capacitance of Q₁ goes through transistor Q₃ and is limited, in first approximation, only by the resistance and turn-on characteristics of Q₃ but it is not affected by leakage inductance L₁ of winding N₁. In this manner, a very fast and well-controlled turn-off of Q₁ (as well as of Q₂) can be achieved. By varying the resistance of switch Q₃, the turn-off performance of primary switch Q₁ can be adjusted to a preferred value.

While the turn-on of primary switches Q₁ and Q₂ are delayed (slowed down) by leakage inductances L₁ and L₂ respectively, turn-off is very fast due to switches Q₃ and Q₄ and their low resistance. By placing switches Q₃ and Q₄ physically close to switches Q₁ and Q₂, maximum speed for turning off switches Q₁ and Q₂ is achieved. Note that the turn-off performance of switches Q₁ and Q₂ is not affected by leakage inductances L₁ and L₂, which allows independent control of turn-on and turn-off transients. Also, it is preferable for EMI (electromagnetic interference) purposes to have the turn-on of switches Q₁ and Q₂ slowed down.

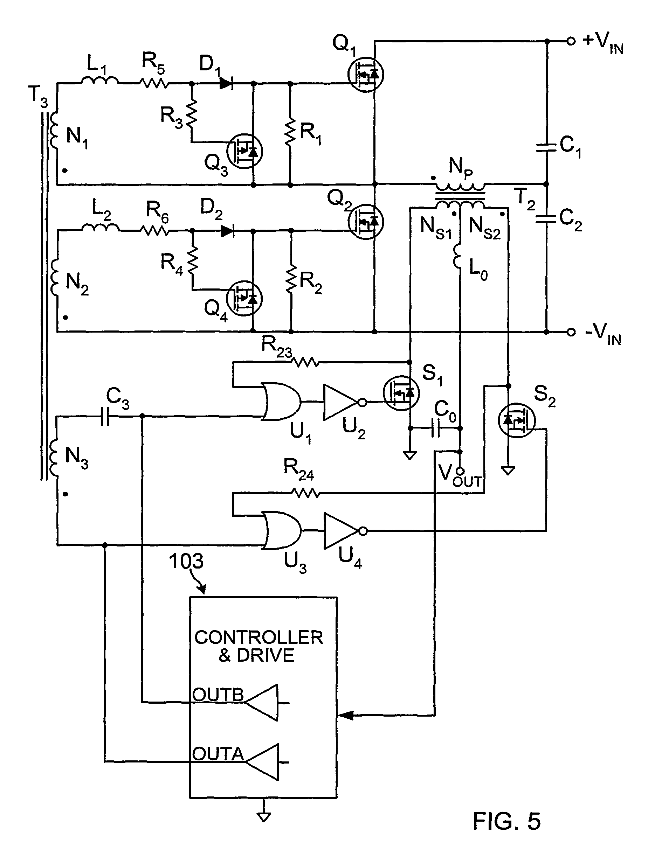

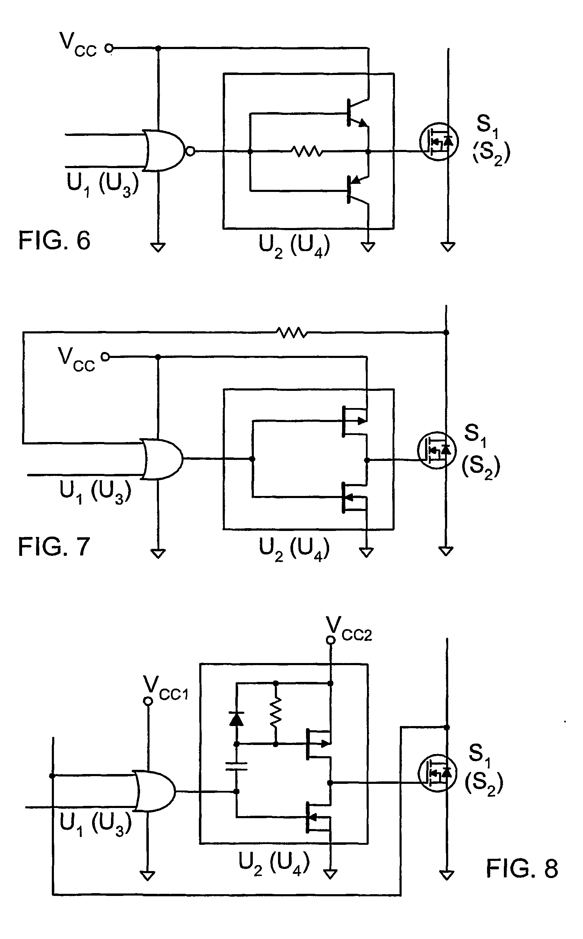

As an alternative, if the control circuit and the drive circuit are on the secondary side of the converter (referenced to the output of the converter), windings N₃ and N₄ can be merged, thus eliminating one winding from the Fig. 1 embodiment, as shown in Fig. 5. In this case, OUTA and OUTB outputs are directly connected to one input of logic gates U₃ and U₁, respectively. Resistors R₃ and R₄ are in series with the gates of switches Q₃ and Q₄ in order to dampen any undesirable oscillations caused between the input capacitance of Q₃ and Q₄ and the leakage inductance in corresponding windings N₁ and N₂. Resistors R₅ and R₆ are to dampen oscillations on the gates of Q₁ and Q₂, respectively, caused by resonance between the leakage inductance L₁ and the input capacitance of Q₁, and leakage inductance L₂ and input capacitance of Q₂. Resistors R₃ through R₆ are not shown in Fig.1 for simplicity of circuit description but would be present for practical realization of the circuit. Note that the salient waveforms in Fig. 2 are still applicable for the circuit of Fig. 5. Also for simplicity only block 103 (incorporating a controller, drive and protection circuitry, as well as regulation circuitry) is shown in Fig. 5. Its specific realization is insignificant to the invention. A significant difference of the Fig. 5 embodiment is to configure the output driver stages, OUTA and OUTB, logic gates U₁ and U₃, and drivers U₂ and U₄ as described. The operating principles correspond to those of the Fig. 1 embodiment. The supply voltage for controller 103 and U₁ through U₄ are referenced to the output of the converter and can be generated in different ways that are not relevant for the operation of the drive circuit. Illustrated in Figs. 6, 7 and 8 are partial circuitry embodiments for the possible realization of drivers U₂ and U₄. In Fig. 6, logic gate U₁ (U₃) is a NOR gate instead of an OR gate since driver stage U₂ (U₄) is non-inverting. Both drivers U₂ and U₄ are identical. In Figs. 7 and 8, driver stage U₂ (U₄) is inverting and logic gate U₁ (U₃) is an OR gate as in Figs. 1 and 5. In Fig. 8, the driver stage U₂ (U₄) allows synchronous rectifier S₁ (S₂) to be driven with a voltage higher than the supply voltage for logic gate U₁ (U₂). Similarly, driver U₄ functions in the same manner with synchronous rectifier S₂. Practical realizations of drivers U₂ and U₄ different from those in Figs. 6 through 8 are also possible.

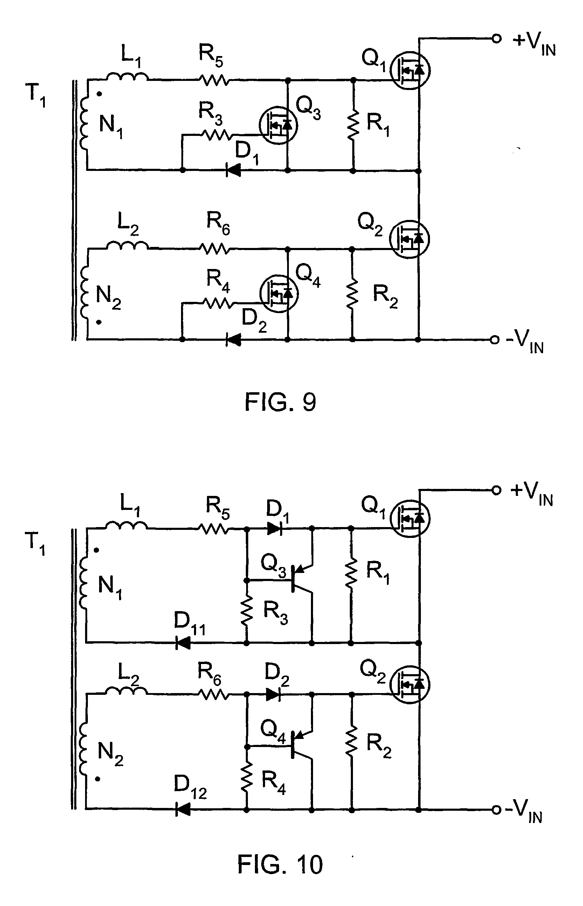

Even though transistors Q₃ and Q₄ (in Figs. 1 and 5) are shown as p-channel MOSFETs, it is possible to use n-channel MOSFETs as well as bipolar transistors. The former are more practical than the latter due to easier drive and an integrated body diode, which would be needed as an external component if switches Q₃ and Q₄ were bipolar transistors. An embodiment realization using n-channel MOSFETs as Q₃ and Q₄ from Figs. 1 and 5 is shown in Fig. 9. When p-n-p bipolar transistors are used for switches Q₃ and Q₄, two additional diodes D₁₁ and D₁₂ would be needed as shown in Fig. 10. Diodes D₁₁ and D₁₂ prevent shorting of windings N₁ and N₂ via the collector-emitter junction of Q₃ and Q₄, respectively. Note that if the circuit of Fig. 10 is used, positive voltage on the gates of transistors Q₁ and Q₂ will be for one diode voltage drop (typically about 0.5V) less than in the original Fig. 1 circuit.

If the control circuit is on the primary side, as in Fig.1, it is desirable that there be a means to disable the converter from a condition sensed on the secondary side, for example, in case of output over-voltage or under-voltage conditions. Similarly, if the feedback and control circuit is referenced to the output of the converter, as in Fig. 5, it is desirable that there be a means to disable the converter from a condition sensed on the primary side, for example, in case of input over-voltage or under-voltage conditions or in order to turn the converter off. One solution, which has previously been employed is to use an opto-coupler, which has several disadvantages:
- It cannot operate at temperatures above 85°C (some are limited to 100°C), and therefore will impose serious limitations on the temperature of the PCB which is also used as a means for cooling semiconductor devices and magnetic devices;
- Unless it is fast (digital), the opto-coupler will not provide a fast disable of the control circuit, particularly in the case of output over-voltage condition when the controller is on the primary side and the converter operates at high switching frequency;
- Opto-couplers are not available in small, low-profile packages. Thus, it will be the tallest component and will impose a limit on the low-profile design of the converter.

Another prior art solution has been to have a separate pulse transformer that will be used only for this function. The main drawbacks of this alternative are:
- An additional component which needs to meet all safety requirements;
- Extra space is required on the PCB, thus imposing limits on the minimum size of the PCB;
- If there is no other use of this transformer it is not a practical solution.

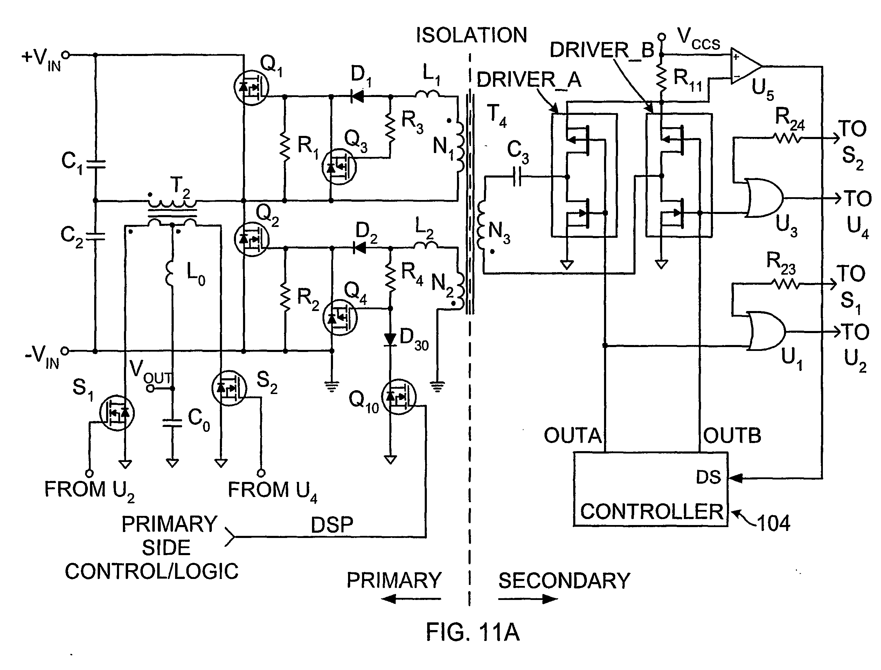

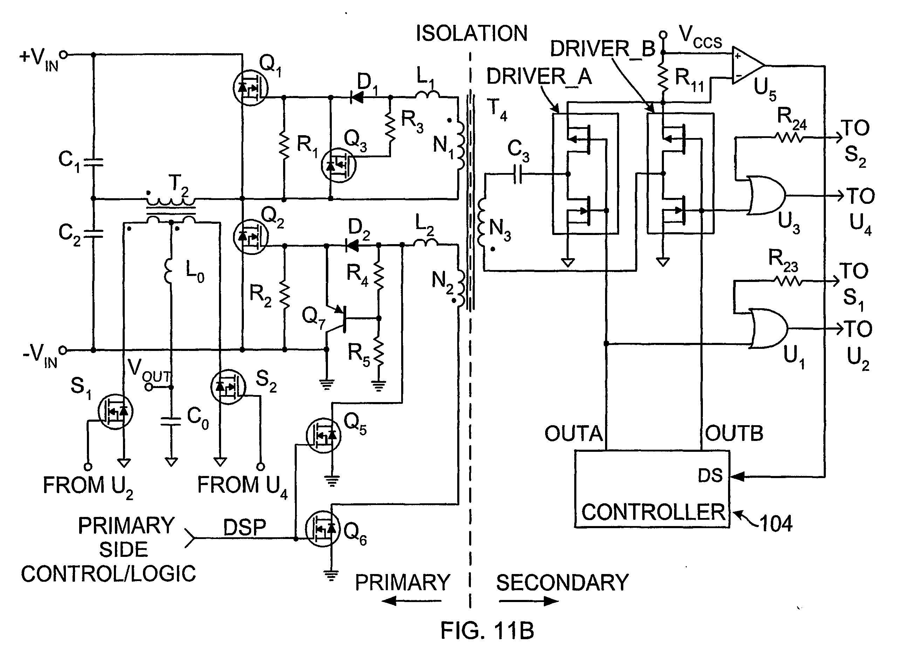

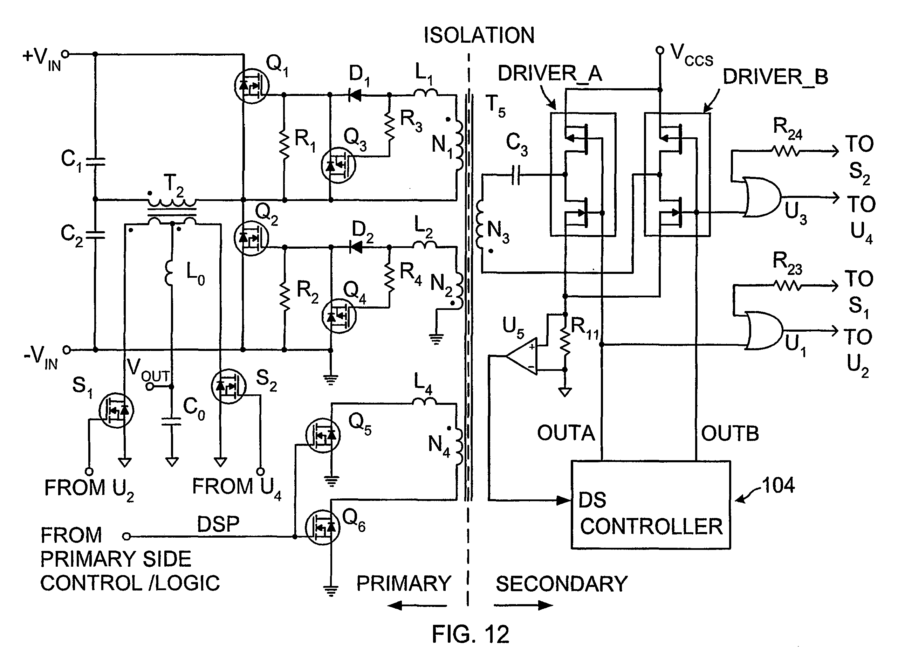

An alternate solution disclosed herein provides, as shown in Figs. 11A, 11B and 12, a means for disabling the control circuit on the secondary side from a condition sensed on the primary side as described in detail below. The principle idea is to short one of the windings of the drive transformer (Figs. 11A and 11B), preferably one that is not floating (N₂), detect excessive current in winding N₃ due to a short in winding N₂ and disable the control circuit and drivers OUTA and OUTB resulting in turn-off of the converter. Another alternative solution is to use a separate winding on the drive transformer and short that winding (Fig. 12). Different circuit realizations are possible as is known to one of ordinary skill in the art.

The primary side protection logic, as shown in Figs. 11A and 11B, initially senses a fault condition and generates a disable signal that is active (high logic level). Transistor Q₁₀ (Fig. 11A), shown as an n-channel MOSFET as an example, and diode D₃₀, form a voltage bi-directional switch, which means that current can flow only in one direction. Diode D₃₀ is necessary to prevent conduction in the body diode of transistor Q₁₀ when the voltage on winding N₂ is positive (the dot end of the winding is more positive than the opposite end) and therefore prevent shorting of winding N₂ during normal operation of the converter. In response to an active disable signal DSP, transistor Q₁₀ is turned-on and diode D₃₀ becomes forward biased when the voltage on winding N₂ is negative. Winding N₂ is then shorted which results in the turn-off of primary switch Q₁ and an increase in current through winding N₃, causing a voltage drop across resistor R₁₁ connected between supply voltage V_{CCS} and drivers DRIVER_A and DRIVER_B referenced to the output of the converter. Note that a possible realization for DRIVER_A and DRIVER_B is shown in Figs. 11A and 11B explicitly as complementary pairs of p- and n-channel MOSFETs. The voltage across resistor R₁₁ is sensed with comparator U₅ that has a threshold set such that in normal operation the voltage drop across resistor R₁₁ will not trip U₅. However, when winding N₂ is shorted, comparator U₅ is activated causing controller 104 to disable the converter by setting both outputs OUTA and OUTB low. Note that transistor Q₁₀ can be connected in parallel with switch Q₄ in which case the gate of primary switch Q₂ will be shorted in response to the active disable signal. As a consequence, winding N₂ will be shorted via Q₁₀ and diode D₂, similarly causing increased current through winding N₂. Diode D₃ (employed in the Fig. 1 embodiment) is not needed in this embodiment. A design characteristic of this solution is that the capacitance of Q₁₀ will affect the turn-on performance of Q₂. In order to achieve similar turn-on characteristics of both Q₁ and Q₂, leakage inductance L₂ is required to be less a L₁, thus resulting in a more complicated drive transformer design. Note that the disable circuit from Fig. 11A has an inherent delay of one switching period since shorting winding N₂ will affect the circuit only during the on-time of transistor Q₁. In most applications this should not be a problem. An alternate solution to the Fig. 11A embodiment is shown in Fig. 11B. Two switches, Q₅ and Q₆, are added to short winding N₂ whenever signal DSP is active. Transistor Q₄ is replaced with p-n-p transistor Q₇ and resistor R₅ is added across the base to the collector of Q₇. When the voltage on winding N₂ is negative, diode D₂ and the body diode of Q₆ are forward biased and transistor Q₂ is on with a gate voltage reduced by the voltage drop across the body diode of Q₆ (typically about 0.8V). A feature of this embodiment is that there is a maximum delay of half the switching period and a stronger signal can be generated across resistor R₁₁ thus allowing a higher threshold for U₅ and improved noise immunity. A weakness is a lower gate voltage on primary switch Q₂. By adding a Shottky diode (not shown) across Q₆, the additional voltage drop could be reduced from about 0.8V to about 0.4V with that extra component.

As an additional embodiment, winding N₄ is added to drive transformer T₁, as shown in Fig. 12, and therefore serves two purposes:
(1) to provide means for disabling the secondary control circuit by shorting winding N₄ with two transistors Q₅ and Q₆; and
(2) to provide regulated bias voltage to the primary control circuit after start-up.

Fig. 12 is very similar to Fig. 11B, with some additions. Transistors Q₅ and Q₆ are added across winding N₄, instead of winding N₂, in order to short the winding if the DSP signal is high to stop the controller on the secondary side immediately whenever a fault condition on the primary side of the converter is detected. In this configuration, the controller is also on the secondary side and the only communication between the primary and secondary control circuit is via drive transformer T₅. Thus, there is no need for extra components with high voltage isolation (for example, opto-coupler or pulse transformer).

Resistor R₁₁ (Fig. 12) is now positioned in the return path of DRIVER_A and DRIVER_B as another embodiment and an alternate solution to Fig. 11B. If winding N₄ is shorted by transistors Q₅ and Q₆, excessive current will flow via resistor R₁₁ and comparator U₅ will generate signal DS to stop the controller, thus turning off the entire converter. Note that the disable circuit from Fig. 12 has an inherent delay of one-half of the switching period since shorting winding N₄ affects the circuit during the on-time of both transistors Q₁ and Q₂.

Winding N₄ has the best coupling with winding N₃, while windings N₂ and N₁ are preferably placed in layers above and below in the PCB. This is the preferred structure because it provides enough leakage between N₃ and N₁ and N₂, and also decouples N₁ and N₂ from N₃ when N₄ is shorted.

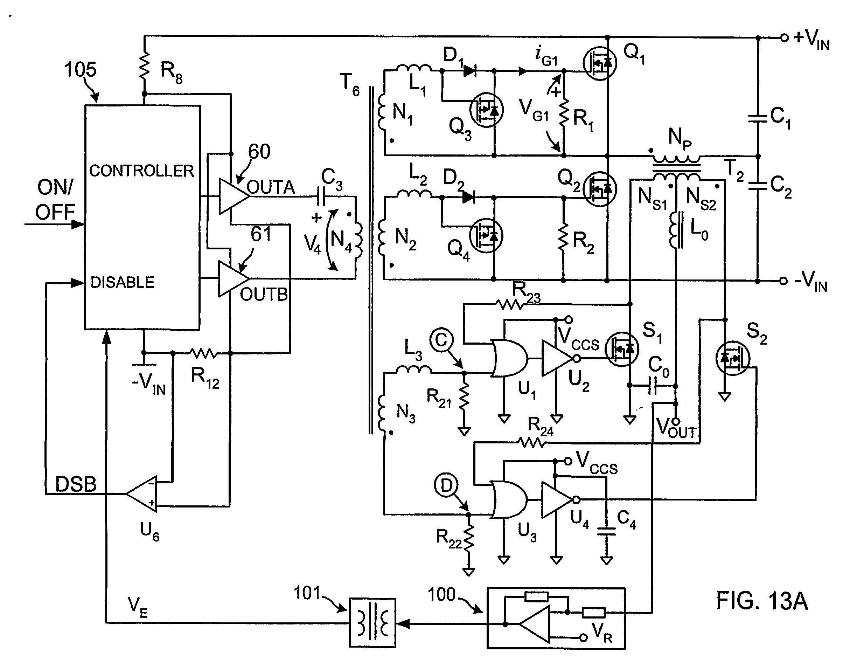

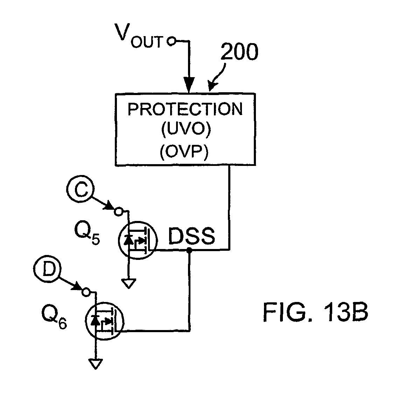

Another embodiment of the invention with the control circuit on the input side of the converter is shown in Fig. 13A in which the disable from the output side is provided by shorting winding N₃. Protection logic 200 (Fig. 13B, referenced to the output of the converter), generates signal DSS whenever the converter needs to be disabled (for example, in case of over-voltage on the output, under-voltage or any other irregular operating condition). Active signal DSS turns-on transistors Q₅ and Q₆ (Fig. 13B), which in turn shorts winding N₃ of drive transformer T₆. The current in winding N₄ is indirectly measured with resistor R₁₂ which is connected in the return path of drivers 60 and 61, which are shown as separate components in Fig. 13A, instead of as internal parts of controller 102 in Fig. 1. Note that drivers 60 and 61, can still be internal parts of controller 105, in which case sensing resistor R₁₂ will measure the total current of the controller and can be placed either in a path to ground or at the +V_{IN} location. The voltage across resistor R₁₂ is sensed with comparator U₆ with a threshold that is set such that in normal operation the voltage drop across resistor R₁₂ will not trip U₆. However, when winding N₃ is shorted, comparator U₆ is tripped and, in turn, generates signal DSB that disables controller 105, drivers 60 and 61, and consequently the converter.

It should be understood that the foregoing embodiments are exemplary for the purpose of teaching the inventive aspects of the present invention that are covered solely by the appended claims and encompass all variations not regarded as a departure from the scope of the invention. It is likely that modifications and improvements will occur to those of ordinary skill in the art are intended to be included within the scope of the following claims and their equivalents.

## Claims

1. A switch-mode power converter for converting an input voltage (V_{IN}) from an input source to an output voltage (V_{OUT}) for supply to a load, the power converter comprising:
a power isolation transformer (T₂) having a primary winding (Nₚ) and a secondary winding (N_{S1},N_{S2});
a primary converter circuit connected to said primary winding of said power transformer, said primary converter circuit comprising at least a first and a second primary controllable power switch (Q₁,Q₂) forming part of a half-bridge, each said switch having two control terminals for alternatively supplying the input voltage to said primary winding of said power isolation transformer to produce a substantially symmetric current in said primary winding;
a full wave secondary converter circuit fully isolated from said primary converter circuit and comprising first and second synchronous rectifiers (S₁,S₂), said synchronous rectifiers being individually switchable and each being connected between a respective end of said second secondary windings and the load;
at least a first and a second primary switch control circuit (Q₃,Q₄,D₁,D₂, R₁,R₂) controlling the conduction of said first and second primary controllable power switches;
synchronous rectifier control circuits (U₁-U₄, D₃-D₁₀,R₂₁-R₂₄) controlling conduction of said each first and second synchronous rectifiers;
a switch conduction control circuit (102) with two outputs (OUTA, OUTB) having substantially symmetrical waveforms shifted by about 180 degrees for controlling the conduction of said primary controllable power switches and said first and second synchronous rectifiers; and
a drive transformer (T₁) used for providing necessary delays between conductions of said primary controllable power switches and said first and second synchronous rectifiers as well as providing power for controlling said primary controllable power switches and said first and second synchronous rectifiers, said drive transformer providing isolation between said primary switch control circuits and said synchronous rectifier control circuits, wherein said synchronous rectifier control circuits turn both said first and second synchronous rectifiers ON during a portion of a switching period when the voltage across the windings of said drive transformer is zero and such that the voltage across the windings of said power isolation transformer becomes zero, and said drive transformer comprising:
a first drive transformer winding (N₄) connected to said switch conduction control circuit; and
a second drive transformer winding (N₁) connected to said first primary switch control circuit, said second drive transformer winding controlling the conduction of said first primary controllable power switch.

2. The power converter recited in claim 1, and further comprising:
a third drive transformer winding (N₂) connected to said second primary switch control circuit, said second primary switch control circuit controlling the conduction of said second primary controllable power switch; and
a fourth drive transformer winding (N₃) connected to said synchronous rectifier control circuits.

3. The power converter recited in claim 1, wherein said switch conduction control circuit is also connected to one end of said input voltage.

4. The power converter recited in claim 2, wherein said second and said third drive transformer windings further comprise leakage inductances associated with said drive transformer windings, wherein one fourth of the period of an oscillation caused by the input capacitance of the primary switch and the leakage inductance is longer than the turn-off time of the synchronous rectifiers such that turn on of the primary switches is delayed by an amount of time needed to turn off the synchronous rectifiers to avoid cross conduction.

5. The power converter recited in claim 1, wherein said each primary switch control circuit further comprises:
at least one controllable switch connected across said control terminals of said primary controllable power switch, said controllable switch being configured to effectively control and provide turn-off of said controllable power switch sufficiently quickly to prevent cross conduction of said primary controllable power switches in case of near equal conduction times; and
a diode configured to control and provide turn-on of said primary controllable power switch and to control and provide turn-on of said controllable switch.

6. The power converter recited in claim 5, wherein said at least one controllable switch is physically located close to said first and second primary controllable power switches such that moving said at least one controllable switch closer to said first and second primary controllable power switches would not substantially reduce the turn off time of the primary switches.

7. The power converter recited in claim 2, wherein said each synchronous rectifier control circuit further comprises:
at least one two input logic circuit to control conduction of said each synchronous rectifier with relatively small input capacitance so that the leakage inductance of said fourth transformer winding does not adversely affect the delay in turning off said synchronous rectifier, wherein one input of said two input logic circuit is connected to one end of said drive transformer winding connected to said synchronous rectifier control circuits, and the second input of said two input logic circuit is connected to the corresponding synchronous rectifier in order to prevent turning-on of said synchronous rectifier before voltage across said synchronous rectifier drops to a predetermined value; and
a driver circuit connected to said each synchronous rectifier providing optimum turn-on of said synchronous rectifier and providing optimum turn-off of said synchronous rectifier with minimum delay.

8. The power converter recited in claim 7, wherein said two input logic circuit comprises protective diodes on each of said two inputs in order to provide negative or positive voltage greater than supply voltage to be applied across each said input of said two input logic circuit.

9. The power converter recited in claim 8, wherein said two input logic circuit further comprises series resistors in each of said two inputs in order to limit current in said protective diodes whenever negative or positive voltage greater than supply voltage is applied across each said input of said tow input logic circuit.

10. The power converter recited in claim 2, wherein said switch conduction control circuit is referenced to said output of said power isolation transformer, thereby allowing said fourth drive transformer winding connected to said synchronous rectifier control circuits and said first drive transformer winding connected to said switch conduction control circuit with two outputs with about 180 degrees shift to be combined, thereby eliminating one winding in said drive transformer.

11. The power converter recited in claim 10, wherein said switch conduction control circuit is connected to said synchronous rectifier control circuits.

12. The power converter recited in claim 3, further comprising means for disabling the power converter on the input side and thus also the output side from a condition sensed on the output side.

13. The power converter recited in claim 3, and further comprising means for enabling the power converter on the input side from a condition sensed on the output side.

14. The power converter recited in claim 11, further comprising means to disable the switch-mode power converter from the output side switch-mode power converter in response to a condition sensed on the input side of said switch-mode power converter.

15. A method of operating a switch-mode power converter for converting an input voltage (V_{IN}) from an input source to an output voltage (V_{OUT}) for supply to a load, the method comprising:
supplying the input voltage to power isolation transformer (T₂) having a primary winding (Nₚ) and a secondary winding (N_{S1},N_{S2}) by operation of a primary converter circuit connected to said primary winding of said power transformer, said primary converter circuit comprising at least a first and a second primary controllable power switch (Q₁,Q₂) forming part of a half-bridge each said switch having two control terminals alternatively supplying the input voltage to said primary winding of said power isolation transformer to produce a substantially symmetric current in said primary winding;
operating a full wave secondary converter circuit fully isolated from said primary converter circuit and comprising first and second synchronous rectifiers (S₁,S₂), said synchronous rectifiers being individually switchable and each being connected between a respective end of said second secondary windings and the load;
operating at least a first and a second primary switch control circuit (Q₃,Q₄,D₁,D₂,R₁,R₂) to control the conduction of said first and second primary controllable power switches;
operating synchronous rectifier control circuits (U₁-U₄,D₃-D₁₀,R₂₁-R₂₄) to control conduction of said each first and second synchronous rectifiers;
operating a switch conduction control circuit (102) with two outputs (OUTA,OUTB) having substantially symmetrical waveforms shifted by about 180 degrees to control the conduction of said primary controllable power switches and said first and second synchronous rectifiers; and
operating a drive transformer (T₁) to provide necessary delays between conductions of said primary controllable power switches and said first and second synchronous rectifiers as well as providing power for controlling said primary controllable power switches and said first and second synchronous rectifiers, said drive transformer providing isolation between said primary switch control circuits and said synchronous rectifier control circuits, wherein said synchronous rectifier control circuits turn both said first and second synchronous rectifiers ON during a portion of a switching period when the voltage across the windings of said drive transformer is zero and such that the voltage across the windings of said power isolation transformer becomes zero, and said drive transformer comprising:
a first drive transformer winding (N₄) connected to said switch conduction control circuit; and
a second drive transformer winding (N₁) connected to said first primary switch control circuit, said second drive transformer winding controlling the conduction of said first primary controllable power switch.

16. The method recited in claim 15, and further comprising:
a third drive transformer winding (N₂) connected to said second primary switch control circuit, said second primary switch control circuit controlling the conduction of said second primary controllable power switch; and
a fourth drive transformer winding (N₃) connected to said synchronous rectifier control circuits.

17. The method recited in claim 15, wherein said switch conduction control circuit is also connected to one end of said input voltage.

18. The method recited in claim 16, wherein said second and said third drive transformer windings further comprise leakage inductances associated with said drive transformer windings, wherein one fourth of the period of an oscillation caused by the input capacitance of the primary switch and the leakage inductance is longer than the turn-off time of the synchronous rectifiers such that turn on of the primary switches is delayed by an amount of time needed to turn off the synchronous rectifiers to avoid cross conduction.

19. The method recited in claim 15, wherein said each primary switch control circuit further comprises:
at least one controllable switch connected across said control terminals of said primary controllable power switch, said controllable switch being configured to effectively control and provide turn-off of said controllable power switch sufficiently quickly to prevent cross conduction of said primary controllable power switches in case of near equal conduction times; and
a diode configured to control and provide turn-on of said primary controllable power switch and to control and provide turn-on of said controllable switch.

20. The method recited in claim 19, wherein said at least one controllable switch is physically located close to said first and second primary controllable power switches such that moving said at least one controllable switch closer to said first and second primary controllable power switches would not substantially reduce the turn off time of the primary switches.

21. The method recited in claim 16, wherein said each synchronous rectifier control circuit further comprises:
at least one two input logic circuit controlling conduction of said each synchronous rectifier with relatively small input capacitance so that the leakage inductance of said fourth transformer winding does not adversely affect the delay in turning off said synchronous rectifier, wherein one input of said two input logic circuit is connected to one end of said drive transformer winding connected to said synchronous rectifier control circuits, and the second input of said two input logic circuit is connected to the corresponding synchronous rectifier in order to prevent turning-on of said synchronous rectifier before voltage across said synchronous rectifier drops to a predetermined value; and
a driver circuit connected to said each synchronous rectifier providing Optimum turn-on of said synchronous rectifier and providing optimum turn-off of said synchronous rectifier with minimum delay.

22. The method recited in claim 21, wherein said two input logic circuit comprises protective diodes on each of said two inputs providing negative or positive voltage greater than supply voltage to be applied across each said input of said two input logic circuit.

23. The method recited in claim 22, wherein said two input logic circuit further comprises series resistors in each of said two inputs limiting current in said protective diodes whenever negative or positive voltage greater than supply voltage is applied across each said input of said tow input logic circuit.

24. The method recited in claim 16, wherein said switch conduction control circuit is referenced to said output of said power isolation transformer, thereby allowing said fourth drive transformer winding connected to said synchronous rectifier control circuits and said first drive transformer winding connected to said switch conduction control circuit with two outputs with about 180 degrees shift to be combined, thereby eliminating one winding in said drive transformer.

25. The method recited in claim 24, wherein said switch conduction control circuit is connected to said synchronous rectifier control circuits.

26. The method recited in claim 17, further comprising means for disabling the power converter on the input side and thus also the output side from a condition sensed on the output side.

27. The method recited in claim 17, and further comprising enabling the power converter on the input side from a condition sensed on the output side.

28. The method recited in claim 25, further comprising disabling the switch-mode power converter from the output side switch-mode power converter in response to a condition sensed on the input side of said switch-mode power converter.

## Patentansprüche

1. Geschalteter Leistungswandler zum Umwandeln einer Eingangsspannung (V_{IN}) von einer Eingangsquelle in eine Ausgangsspannung (V_{OUT}) zur Versorgung eines Verbrauchers, wobei der Leistungswandler aufweist:
einen Leistungstrenntransformator (T₂) mit einer Primärwicklung (N_{P}) und einer Sekundärwicklung (N_{S1},N_{S2}),
eine an die Primärwicklung des Leistungstransformators angeschlossene Primärwandlerschaltung, die wenigstens einen ersten und einen zweiten steuerbaren Primärleistungsschalter (Q₁,Q₂) aufweist, der einen Teil einer Halbbrücke bildet, wobei jeder Schalter zwei Steueranschlüsse zum alternativen Zuführen der Eingangsspannung an die Primärwicklung des Leistungstrenntransformators aufweist, um einen im wesentlichen symmetrischen Strom in der Primärwicklung zu erzeugen,
eine Vollwellen-Sekundärwandlerschaltung, die vollständig von der Primärwandlerschaltung getrennt ist und erste und zweite Synchrongleichrichter (S₁,S₂) aufweist, die einzeln schaltbar und jeweils zwischen zugehörigen Enden der zweiten Sekundärwicklungen und des Verbrauchers angeschlossen sind,
wenigstens eine erste und eine zweite Primärschaltersteuerschaltung (Q₃,Q₄,D₁,D₂,R₁,R₂), die die Leitfähigkeit des ersten und des zweiten steuerbaren Primärleistungsschalters steuern,
Synchrongleichrichtersteuerschaltungen (U₁-U₄,D₃-D₁₀,R₂₁-R₂₄) zum Steuern der Leitfähigkeit von jedem der ersten und zweiten Synchrongleichrichter,
eine Leitfähigkeitsschaltungs-Steuerschaltung (102) mit zwei Ausgängen (OUTA,OUTB), die im wesentlichen symmetrische Wellenformen aufweisen, die um etwa 180° zum Steuern der Leitfähigkeit des steuerbaren Primärleistungsschalters und des ersten und des zweiten Synchrongleichrichters verschoben sind, und
einen Antriebstransformator (T₁), der zum Bereitstellen notwendiger Verzögerungen zwischen den Leitfähigkeiten der steuerbaren Primärleistungsschalter und des ersten und des zweiten Synchrongleichrichters, sowie zur Leistungsversorgung zum Steuern der steuerbaren Primärleistungsschalter und des ersten und des zweiten Synchrongleichrichters verwendet wird, wobei der Antriebstransformator eine Trennung zwischen den Primärschaltersteuerschaltungen und den Synchrongleichrichtersteuerschaltungen schafft, wobei die Synchrongleichrichtersteuerschaltungen sowohl den ersten als auch den zweiten Synchrongleichrichter während eines Abschnitts einer Schaltungsperiode auf EIN schalten, wenn der Spannungsabfall über den Wicklungen des Antriebstransformators Null beträgt, und so daß der Spannungsabfall über den Wicklungen des Leistungstrenntransformators Null wird, und wobei der Antriebstransformator aufweist:
eine erste Antriebstransformatorwicklung (N₄), die an die SchalterleitfähigkeitsSteuerschaltung angeschlossen ist, und
eine zweite Antriebstransformatorwicklung (N₁), die an die erste Primärschaltersteuerschaltung angeschlossen ist und die Leitfähigkeit des ersten steuerbaren Primärleistungsschalters steuert.

2. Leistungswandler nach Anspruch 1, ferner mit
einer dritten Antriebstransformatorwicklung (N₂), die an die zweite Primärschaltersteuerschaltung angeschlossen ist, wobei die zweite Primärschaltersteuerschaltung die Leitfähigkeit des zweiten steuerbaren Primärleistungsschalters steuert, und
einer vierten Antriebstransformatorwicklung (N₃), die an die Synchrongleichrichtersteuerschaltungen angeschlossen ist.

3. Leistungswandler nach Anspruch 1, wobei die Schalterleitfähigkeitssteuerschaltung auch an ein Ende der Eingangsspannung angeschlossen ist.

4. Leistungswandler nach Anspruch 2, wobei die zweite und die dritte Antriebstransformatorwicklung ferner Streuinduktivitäten aufweisen, die den Antriebstransformatorwicklungen zugeordnet sind, wobei ein Viertel der Periode einer durch die Eingangskapazität des Primärschalters und die Streuinduktivität verursachten Schwingung länger ist als die Abschaltdauer der Synchrongleichrichter, so daß sich das Einschalten der Primärschalter um einen Zeitbetrag verzögert, der zum Abschalten der Synchrongleichrichter benötigt wird, um Cross-Conduction zu vermeiden.

5. Leistungswandler nach Anspruch 1, wobei jede Primärschaltersteuerschaltung ferner aufweist:
wenigstens einen steuerbaren Schalter, der an den Steueranschlüssen des steuerbaren Primärleistungsschalters angeschlossen ist, und der dazu ausgelegt ist, den steuerbaren Leistungsschalter wirksam zu steuern und ausreichend schnell auszuschalten, um Cross-Conduction der steuerbaren Primärleistungsschalter im Falle nahezu gleicher Leitfähigkeitszeiten zu verhindern, und
eine Diode, die dazu ausgelegt ist, den steuerbaren Primärleistungsschalter zu steuern und einzuschalten, sowie den steuerbaren Schalter zu steuern und einzuschalten.

6. Leistungswandler nach Anspruch 5, wobei wenigstens ein steuerbarer Schalter physikalisch nahe an dem ersten und dem zweiten steuerbaren Primärleistungsschalter angeordnet ist, so daß ein Bewegen des wenigstens einen steuerbaren Schalters näher zu dem ersten und dem zweiten steuerbaren Primärleistungsschalter hin die Abschaltdauer der Primärleistungsschalter nicht wesentlich reduziert.

7. Leistungswandler nach Anspruch 2, wobei jede der Synchrongleichrichtersteuerschaltungen ferner aufweist:
wenigstens eine logische Doppeleingangsschaltung zum Steuern der Leitfähigkeit jedes Synchrongleichrichters mit relativ kleiner Eingangskapazität, so daß die Streuinduktivität der vierten Transformatorwicklung die Verzögerung im Ausschalten des Synchrongleichrichters nicht negativ beeinflußt, wobei ein Eingang der logischen Doppeleingangsschaltung an ein Ende der Antriebstransformatorwicklung angeschlossen ist, das an die Synchrongleichrichtersteuerschaltungen angeschlossen ist, und der zweite Eingang der logischen Doppeleingangsschaltung an den entsprechenden Synchrongleichrichter angeschlossen ist, um ein Einschalten des Synchrongleichrichters zu vermeiden, bevor die Spannung über dem Synchrongleichrichter auf einen vorbestimmten Wert abfällt, und
eine an jeden der Synchrongleichrichter angeschlossene Antriebsschaltung; die ein optimales Einschalten und ein optimales Ausschalten des Synchrongleichrichters mit minimaler Verzögerung ermöglicht.

8. Leistungswandler nach Anspruch 7, wobei die logische Doppeleingangsschaltung an jeder ihrer zwei Eingänge Schutzdioden aufweist, um eine negative oder positive Spannung, die größer als die Versorgungsspannung ist, zum Anlegen über jedem der Eingänge der logischen Doppeleingangsschaltung zu liefern.

9. Leistungswandler nach Anspruch 8, wobei die logische Doppeleingangsschaltung ferner serielle Widerstände in jedem der zwei Eingänge aufweist, um den Strom in den Schutzdioden zu begrenzen, wenn negative oder positive Spannungen über jeden der Eingänge der logischen Doppeleingangsschaltung angelegt werden, die größer als die Versorgungsspannung sind.

10. Leistungswandler nach Anspruch 2, wobei die Schalterleitfähigkeitssteuerschaltung auf den Ausgang des Leistungstrenntransformators bezogen ist, wodurch ermöglicht wird, daß die an die Synchrongleichrichtersteuerschaltungen angeschlossene vierte Antriebstransformatorwicklung und die an die Schalterleitfähigkeitssteuerschaltung angeschlossene erste Antriebstransformatorwicklung mit zwei Ausgängen mit etwa 180° Verschiebung kombiniert werden, wodurch eine Wicklung in dem Antriebstransformator entfällt.

11. Leistungswandler nach Anspruch 10, wobei die Schalterleitfähigkeitssteuerschaltung an die Synchrongleichrichtersteuerschaltungen angeschlossen ist.

12. Leistungswandler nach Anspruch 3, ferner mit einer Einrichtung zum Deaktivieren des Leistungswandlers auf der Eingangsseite und damit auch der Ausgangsseite bezüglich eines an der Ausgangsseite gemessenen Zustands.

13. Leistungswandler nach Anspruch 3, ferner mit einer Einrichtung zum Aktivieren des Leistungswandlers auf der Eingangsseite bezüglich eines auf der Ausgangsseite gemessenen Zustands.

14. Leistungswandler nach Anspruch 11, ferner mit einer Einrichtung zum Deaktivieren des geschalteten Leistungswandlers bezüglich der Ausgangsseite des geschalteten Leistungswandlers in Reaktion auf einen auf der Eingangsseite des geschalteten Leistungswandlers gemessenen Zustand.

15. Verfahren zum Betreiben eines geschalteten Leistungswandlers zum Umwandeln einer Eingangsspannung (V_{IN}) von einer Eingangsquelle in eine Ausgangsspannung (V_{OUT}) zur Versorgung eines Verbrauchers, wobei in dem Verfahren:
die Eingangsspannung an einen Leistungstrenntransformator (T₂) mit einer Primärwicklung (N_{P}) und einer Sekundärwicklung (N_{S1},N_{S2}) geliefert wird, indem eine an die Primärwicklung des Leistungstransformators angeschlossene Primärwandlerschaltung betrieben wird, die wenigstens einen ersten und einen zweiten steuerbaren Primärleistungsschalter (Q₁,Q₂) aufweist, der einen Teil einer Halbbrücke bildet, wobei jeder Schalter zwei Steueranschlüsse zum alternativen Zuführen der Eingangsspannung an die Primärwicklung des Leistungstrenntransformators aufweist, um einen im wesentlichen symmetrischen Strom in der Primärwicklung zu erzeugen,
eine Vollwellen-Sekundärwandlerschaltung betrieben wird, die vollständig von der Primärwandlerschaltung getrennt ist und erste und zweite Synchrongleichrichter (S₁,S₂) aufweist, die einzeln schaltbar und jeweils zwischen zugehörigen Enden der zweiten Sekundärwicklungen und des Verbrauchers angeschlossen sind,
wenigstens eine erste und eine zweite Primärschaltersteuerschaltung (Q₃,Q₄,D₁,D₂,R₁,R₂) betrieben wird, um die Leitfähigkeit des ersten und des zweiten steuerbaren Primärleistungsschalters zu steuern,
Synchrongleichrichtersteuerschaltungen (U₁-U₄,D₃-D₁₀,R₂₁-R₂₄) betrieben werden, um die Leitfähigkeit von jedem der ersten und zweiten Synchrongleichrichter zu steuern,
eine Leitfähigkeitsschaltungs-Steuerschaltung (102) mit zwei Ausgängen (OUTA,OUTB) betrieben wird, die im wesentlichen symmetrische Wellenformen aufweisen, die um etwa 180° zum Steuern der Leitfähigkeit des steuerbaren Primärleistungsschalters und des ersten und des zweiten Synchrongleichrichters verschoben sind, und
ein Antriebstransformator (T₁) betrieben wird, um notwendige Verzögerungen zwischen den Leitfähigkeiten der steuerbaren Primärleistungsschalter und des ersten und des zweiten Synchrongleichrichters bereitzustellen, sowie um Leistung zur Steuerung der steuerbaren Primärleistungsschalter und des ersten und des zweiten Synchrongleichrichters zu liefern, wobei der Antriebstransformator eine Trennung zwischen den Primärschaltersteuerschaltungen und den Synchrongleichrichtersteuerschaltungen schafft, wobei die Synchrongleichrichtersteuerschaltungen sowohl den ersten als auch den zweiten Synchrongleichrichter während eines Abschnitts einer Schaltungsperiode auf EIN schalten, wenn der Spannungsabfall über den Wicklungen des Antriebstransformators Null beträgt; und so daß der Spannungsabfall über den Wicklungen des Leistungstrenntransformators Null wird, und wobei der Antriebstransformator aufweist:
eine erste Antriebstransformatorwicklung (N₄), die an die SchalterleitfähigkeitsSteuerschaltung angeschlossen ist, und
eine zweite Antriebstransformatorwicklung (N₁), die an die erste Primärschaltersteuerschaltung angeschlossen ist und die Leitfähigkeit des ersten steuerbaren Primärleistungsschalters steuert.

16. Verfahren nach Anspruch 15, ferner mit
einer dritten Antriebstransformatorwicklung (N₂), die an die zweite Primärschaltersteuerschaltung angeschlossen ist, wobei die zweite Primärschaltersteuerschaltung die Leitfähigkeit des zweiten steuerbaren Primärleistungsschalters steuert, und
einer vierten Antriebstransformatorwicklung (N₃), die an die Synchrongleichrichtersteuerschaltungen angeschlossen ist.

17. Verfahren nach Anspruch 15, wobei die Schalterleitfähigkeitssteuerschaltung auch an ein Ende der Eingangsspannung angeschlossen ist.

18. Verfahren nach Anspruch 16, wobei die zweite und die dritte Antriebstransformatorwicklung ferner Streuinduktivitäten aufweisen, die den Antriebstransformatorwicklungen zugeordnet sind, wobei ein Viertel der Periode einer durch die Eingangskapazität des Primärschalters und die Streuinduktivität verursachten Schwingung länger ist als die Abschaltdauer der Synchrongleichrichter, so daß sich das Einschalten der Primärschalter um einen Zeitbetrag verzögert, der zum Abschalten der Synchrongleichrichter benötigt wird, um Cross-Conduction zu vermeiden.

19. Verfahren nach Anspruch 15, wobei jede Primärschaltersteuerschaltung ferner aufweist:
wenigstens einen steuerbaren Schalter, der an den Steueranschlüssen des steuerbaren Primärleistungsschalters angeschlossen ist, und der dazu ausgelegt ist, den steuerbaren Leistungsschalter wirksam zu steuern und ausreichend schnell auszuschalten, um Cross-Conduction der steuerbaren Primärleistungsschalter im Falle nahezu gleicher Leitfähigkeitszeiten zu verhindern, und
eine Diode, die dazu ausgelegt ist, den steuerbaren Primärleistungsschalter zu steuern und einzuschalten, sowie den steuerbaren Schalter zu steuern und einzuschalten.

20. Verfahren nach Anspruch 19, wobei wenigstens ein steuerbarer Schalter physikalisch nahe an dem ersten und dem zweiten steuerbaren Primärleistungsschalter angeordnet ist, so daß ein Bewegen des wenigstens einen steuerbaren Schalters näher zu dem ersten und dem zweiten steuerbaren Primärleistungsschalter hin die Abschaltdauer der Primärleistungsschalter nicht wesentlich reduziert.

21. Verfahren nach Anspruch 16, wobei jede der Synchrongleichrichtersteuerschaltungen ferner aufweist:
wenigstens eine logische Doppeleingangsschaltung zum Steuern der Leitfähigkeit jedes Synchrongleichrichters mit relativ kleiner Eingangskapazität, so daß die Streuinduktivität der vierten Transformatorwicklung die Verzögerung im Ausschalten des Synchrongleichrichters nicht negativ beeinflußt, wobei ein Eingang der logischen Doppeleingangsschaltung an ein Ende der Antriebstransformatorwicklung angeschlossen ist, das an die Synchrongleichrichtersteuerschaltungen angeschlossen ist, und der zweite Eingang der logischen Doppeleingangsschaltung an den entsprechenden Synchrongleichrichter angeschlossen ist, um ein Einschalten des Synchrongleichrichters zu vermeiden, bevor die Spannung über dem Synchrongleichrichter auf einen vorbestimmten Wert abfällt, und
eine an jeden der Synchrongleichrichter angeschlossene Antriebsschaltung, die ein optimales Einschalten und ein optimales Ausschalten des Synchrongleichrichters mit minimaler Verzögerung ermöglicht.

22. Verfahren nach Anspruch 21, wobei die logische Doppeleingangsschaltung an jeder ihrer zwei Eingänge Schutzdioden aufweist, die eine negative oder positive Spannung, die größer als die Versorgungsspannung ist, zum Anlegen über jedem der Eingänge der logischen Doppeleingangsschaltung zu liefern.

23. Verfahren nach Anspruch 22, wobei die logische Doppeleingangsschaltung ferner serielle Widerstände in jedem der zwei Eingänge aufweist, die den Strom in den Schutzdioden begrenzen, wenn negative oder positive Spannungen über jeden der Eingänge der logischen Doppeleingangsschaltung angelegt werden, die größer als die Versorgungsspannung sind.

24. Verfahren nach Anspruch 16, wobei die Schalterleitfähigkeitssteuerschaltung auf den Ausgang des Leistungstrenntransformators bezogen ist, wodurch ermöglicht wird, daß die an die Synchrongleichrichtersteuerschaltungen angeschlossene vierte Antriebstransformatorwicklung und die an die Schalterleitfähigkeitssteuerschaltung angeschlossene erste Antriebstransformatorwicklung mit zwei Ausgängen mit etwa 180° Verschiebung kombiniert werden, wodurch eine Wicklung in dem Antriebstransformator entfällt.

25. Verfahren nach Anspruch 24, wobei die Schalterleitfähigkeitssteuerschaltung an die Synchrongleichrichtersteuerschaltungen angeschlossen ist.

26. Verfahren nach Anspruch 17, ferner mit einer Einrichtung zum Deaktivieren des Leistungswandlers auf der Eingangsseite und damit auch der Ausgangsseite bezüglich eines an der Ausgangsseite gemessenen Zustands.

27. Verfahren nach Anspruch 17, ferner mit einer Einrichtung zum Aktivieren des Leistungswandlers auf der Eingangsseite bezüglich eines auf der Ausgangsseite gemessenen Zustands.

28. Verfahren nach Anspruch 25, ferner mit einer Einrichtung zum Deaktivieren des geschalteten Leistungswandlers bezüglich der Ausgangsseite des geschalteten Leistungswandlers in Reaktion auf einen auf der Eingangsseite des geschalteten Leistungswandlers gemessenen Zustand.

## Revendications

1. Convertisseur de puissance à mode commuté destiné à convertir une tension (V_{IN}) d'entrée à partir d'une source d'entrée en une tension (V_{OUT}) de sortie pour être fournie à une charge, le convertisseur de puissance comprenant :
un transformateur (T₂) d'isolation de puissance ayant un enroulement (Nₚ) primaire ainsi qu'un enroulement (N_{S1}, N_{S2}) secondaire ;
un circuit de convertisseur primaire raccordé audit enroulement primaire dudit transformateur de puissance, ledit circuit de convertisseur primaire comportant au moins un premier et un deuxième commutateur (Q₁, Q₂) de puissance commandables primaires formant une partie d'un demi-pont, chaque dit commutateur ayant deux bornes de commande destinées à fournir alternativement la tension d'entrée audit enroulement primaire dudit transformateur d'isolation de puissance afin de produire un courant substantiellement symétrique dans ledit enroulement primaire ;
un circuit de convertisseur secondaire à onde complète entièrement isolé dudit circuit de convertisseur primaire et comprenant un premier, et un deuxième redresseur (S1, S2) synchrones, lesdits redresseurs synchrones étant individuellement commutables, et chacun étant raccordé entre une extrémité respective dudit deuxième enroulement secondaire et la charge ;
au moins un premier et un deuxième circuit (Q₃, Q₄, D₁, D₂, R₁, R₂) de commande de commutateur primaire commandant la conduction desdits premier et deuxième commutateur de puissance commandables primaires ;
des circuits (U₁-U₄, D₃-D₁₀, R₂₁-R₂₄) de commande de redresseur synchrone commandant la conduction dudit chaque premier et deuxième redresseur synchrones ;
un circuit (102) de commande de conduction de commutateur avec deux sorties (OUTA, OUTB) ayant substantiellement des formes d'onde symétriques décalées de 180 degrés environ pour commander la conduction desdits commutateurs de puissance commandables primaires et desdits premier et deuxième redresseurs synchrones ; et
un transformateur (T₁) d'entraînement utilisé pour fournir des retards nécessaires entre des conductions desdits commutateurs de puissance commandables primaires et desdits premier et deuxième redresseurs synchrones, et pour fournir de même une alimentation pour commander lesdits commutateurs de puissance commandables primaires et lesdits premier et deuxième redresseurs synchrones, ledit transformateur d'entraînement fournissant une isolation entre lesdits circuits de commande de commutateur primaire et lesdits circuits de commande de redresseur synchrone, dans lequel lesdits circuits de commande de redresseur synchrone activent (ON) à la fois lesdits premier et deuxième redresseurs synchrones pendant une partie d'une période de commutation lorsque la tension à travers les enroulements dudit transformateur d'entraînement est nulle et dé sorte que la tension à travers les enroulements dudit transformateur d'isolation de puissance devienne nulle, et ledit transformateur d'entraînement comprenant :
un premier enroulement (N₄) de transformateur d'entraînement raccordé audit circuit de commande de conduction de commutateur ; et
un deuxième enroulement (N₁) de transformateur d'entraînement raccordé audit premier circuit de commande de commutateur primaire, ledit deuxième enroulement de transformateur d'entraînement commandant la conduction dudit premier commutateur de puissance commandable primaire.

2. Convertisseur de puissance selon la revendication 1, et comprenant de plus :
un troisième enroulement (N₂) de transformateur d'entraînement raccordé audit deuxième circuit de commande de commutateur primaire, ledit deuxième circuit de commande de commutateur primaire commandant la conduction dudit deuxième commutateur de puissance commandable primaire ; et
un quatrième enroulement (N₃) de transformateur d'entraînement raccordé auxdits circuits de commande de redresseur synchrone.

3. Convertisseur de puissance selon la revendication 1, dans lequel ledit circuit de commande de conduction de commutateur est également raccordé à une extrémité de ladite tension d'entrée.

4. Convertisseur de puissance selon la revendication 3, dans lequel ledit deuxième et ledit troisième enroulement de transformateur d'entraînement comportent de plus des inductances de fuite associées auxdits enroulements de transformateur d'entraînement, où un quart de la période d'une oscillation provoquée par la capacité d'entrée du commutateur primaire et l'inductance de fuite est plus long que le temps de coupure des redresseurs synchrones de sorte qu'une activation des commutateurs primaires soit retardée d'une quantité de temps nécessaire pour couper les redresseurs synchrones afin d'éviter une conduction de croisement.

5. Convertisseur de puissance selon la revendication 1, dans lequel ledit chaque circuit de commande de commutateur primaire comporte de plus :
au moins un commutateur commandable raccordé à travers lesdites bornes de commande dudit commutateur de puissance commandable primaire, ledit commutateur commandable étant configuré pour commander et fournir efficacement une coupure dudit commutateur de puissance commandable primaire suffisamment rapidement pour éviter une conduction de croisement desdits commutateurs de puissance commandables primaires dans le cas de temps de conduction quasiment égaux ; et
une diode configurée pour commander et assurer l'activation dudit commutateur de puissance commandable primaire et pour commander et assurer l'activation dudit commutateur commandable.

6. Convertisseur de puissance selon la revendication 5, dans lequel ledit au moins un commutateur commandable est disposé physiquement à proximité desdits premier et deuxième commutateurs de puissance commandables primaires de sorte que le déplacement dudit au moins un commutateur commandable de façon plus proche desdits premier et deuxième commutateur de puissance commandables primaires ne réduirait pas substantiellement le temps de coupure des commutateurs primaires.

7. Convertisseur de puissance selon la revendication 2, dans lequel chaque dit circuit de commande de redresseur synchrone comporte de plus :
au moins un circuit logique à deux entrées pour commander une conduction de chaque dit redresseur synchrone avec une capacité d'entrée relativement faible de sorte que l'inductance de fuite dudit quatrième enroulement de transformateur ne compromette pas le retard dans la coupure dudit redresseur synchrone, où une entrée dudit circuit logique à deux entrées est raccordée à une extrémité dudit enroulement de transformateur d'entraînement raccordé auxdits circuits de commande de redresseur synchrone, et la deuxième entrée dudit circuit logique à deux entrées est raccordée au redresseur synchrone correspondant afin d'empêcher une activation dudit redresseur synchrone avant qu'une tension à travers ledit redresseur synchrone ne chute à une valeur prédéterminée ; et
un circuit d'excitation raccordé audit chaque redresseur synchrone assurant l'activation optimale dudit redresseur synchrone et fournissant une coupure optimale dudit redresseur synchrone avec un retard minimal.

8. Convertisseur de puissance selon la revendication 7, dans lequel ledit circuit logique à deux entrées comporte des diodes de protection sur chacune desdites deux entrées afin de fournir une tension négative ou positive supérieure à une tension d'alimentation à appliquer aux bornes de chaque dite entrée dudit circuit logique à deux entrées.

9. Convertisseur de puissance selon la revendication 8, dans lequel ledit circuit logique à deux entrées comporte de plus des résistances en série dans chacune desdites deux entrées afin de limiter le courant dans lesdites diodes de protection à chaque fois qu'une tension négative ou positive supérieure à une tension d'alimentation est appliquée aux bornes de chaque dite entrée dudit circuit logique à deux entrées.

10. Convertisseur de puissance selon la revendication 2, dans lequel ledit circuit de commande de conduction de commutateur a pour référence ladite sortie dudit transformateur d'isolation de puissance, permettant de la sorte audit quatrième enroulement de transformateur d'entraînement, raccordé auxdits circuits de commande de redresseur synchrone, et audit premier enroulement de transformateur d'entraînement, raccordé audit circuit de commande de conduction du commutateur avec deux sorties ayant un décalage d'environ 180°, d'être combinés, éliminant de la sorte un enroulement dudit transformateur d'entraînement.

11. Convertisseur de puissance selon la revendication 10, dans lequel ledit circuit de commande de conduction de commutateur est raccordé auxdits circuits de commande de redresseur synchrone.

12. Convertisseur de puissance selon la revendication 3, comprenant de plus un moyen pour désactiver le convertisseur de puissance sur le côté d'entrée et ainsi également le côté de sortie à partir d'une condition détectée sur le côté de sortie.

13. Convertisseur de puissance selon la revendication 3, et comportant de plus un moyen pour activer le convertisseur de puissance sur le côté d'entrée à partir d'une condition détectée sur le côté de sortie.

14. Convertisseur de puissance selon la revendication 11, comprenant de plus un moyen pour désactiver le convertisseur de puissance à mode commuté à partir du côté de la sortie dudit convertisseur de puissance à mode commuté en réponse à une condition détectée sur le côté d'entrée dudit convertisseur de puissance à mode commuté.

15. Procédé d'exploitation d'un convertisseur de puissance à mode commuté destiné à convertir une tension (V_{IN}) d'entrée en provenance d'une source d'entrée en tension (V_{OUT}) de sortie pour être fournie à une charge, comprenant :
la fourniture de la tension d'entrée à un transformateur (T₂) d'isolation de puissance ayant un enroulement primaire (Nₚ) et un enroulement secondaire (N_{S1}, N_{S2}) par l'exploitation d'un circuit convertisseur primaire raccordé audit enroulement primaire dudit transformateur d'alimentation, ledit circuit de convertisseur primaire comportant au moins un premier et un deuxième commutateur (Q₁, Q₂) de puissance commandables primaires formant une partie d'un demi-pont, chaque dit commutateur ayant deux bornes de commande fournissant alternativement la tension d'entrée audit enroulement primaire dudit transformateur d'isolation de puissance afin de produire un courant substantiellement symétrique dans ledit enroulement primaire ;
l'exploitation d'un circuit de convertisseur secondaire à onde complète entièrement isolé dudit circuit de convertisseur primaire et comprenant un premier et un deuxième redresseur (S1, S2) synchrones, lesdits redresseurs synchrones étant individuellement commutables, et chacun étant raccordé entre une extrémité respective dudit deuxième enroulement secondaire et la charge ;
l'exploitation d'au moins un premier et un deuxième circuit (Q₃, Q₄, D₁, D₂, R₁, R₂) de commande de commutateur primaire pour commander la conduction desdits premier et deuxième commutateur de puissance commandable primaires ;
l'exploitation de circuits (U₁-U₄, D₃-D₁₀, R₂₁-R₂₄) de commande de redresseur synchrone pour commander la conduction dudit chaque premier et deuxième redresseur synchrones ;
l'exploitation d'un circuit (102) de commande de conduction de commutateur avec deux sorties (OUTA, OUTB) ayant substantiellement des formes d'onde symétriques décalées de 180 degrés environ pour commander la conduction desdits commutateurs de puissance commandables primaires et desdits premier et deuxième redresseurs synchrones ; et
l'exploitation d'un transformateur (T₁) d'entraînement pour fournir des retards nécessaires entre les conductions desdits commutateurs de puissance commandables primaires et desdits premier et deuxième redresseurs synchrones, et pour fournir de même une alimentation pour commander lesdits commutateurs de puissance commandables primaires et lesdits premier et deuxième redresseurs synchrones, ledit transformateur d'entraînement fournissant une isolation entre lesdits circuits de commande de commutateur primaire et lesdits circuits de commande de redresseur synchrone, lesdits circuits de commande de redresseur synchrone activant (ON) à la fois lesdits premier et deuxième redresseurs synchrones pendant une partie d'une période de commutation lorsque la tension à travers les enroulements dudit transformateur d'entraînement est nulle et de sorte que la tension à travers les enroulements dudit transformateur d'isolation de puissance devienne nulle, et ledit transformateur d'entraînement comprenant :
un premier enroulement (N₄) de transformateur d'entraînement raccordé audit circuit de commande de conduction de commutateur ; et
un deuxième enroulement (N₁) de transformateur d'entraînement raccordé audit premier circuit de commande de commutateur primaire, ledit deuxième enroulement de transformateur d'entraînement commandant la conduction dudit premier commutateur de puissance commandable primaire.

16. Procédé selon la revendication 15, et comprenant de plus :
un troisième enroulement (N₂) de transformateur d'entraînement raccordé audit deuxième circuit de commande de commutateur primaire, ledit deuxième circuit de commande de commutateur primaire commandant la conduction dudit deuxième commutateur de puissance commandable primaire ; et
un quatrième enroulement (N₃) de transformateur d'entraînement raccordé audits circuits de commande de redresseur synchrone.

17. Procédé selon la revendication 15, dans lequel ledit circuit de commande de conduction de commutateur est également raccordé à une extrémité de ladite tension d'entrée.

18. Procédé selon la revendication 16, dans lequel ledit deuxième et ledit troisième enroulement de transformateur d'entraînement comportent de plus des inductances de fuite associées auxdits enroulements de transformateur d'entraînement, où un quart de la période d'une oscillation provoquée par la capacité d'entrée du commutateur primaire et l'inductance de fuite est plus long que le temps de coupure des redresseurs synchrones de sorte qu'une activation des commutateurs primaires est retardée par une quantité de temps nécessaire pour couper les redresseurs synchrones pour éviter une conduction de croisement.

19. Procédé selon la revendication 15, dans lequel ledit chaque circuit de commande de commutateur primaire comporte de plus :
au moins un commutateur commandable raccordé auxdites bornes de commande dudit commutateur de puissance commandable primaire, ledit commutateur commandable étant configuré pour commander et fournir efficacement une coupure dudit commutateur de puissance commandable suffisamment rapidement afin d'éviter une conduction de croisement desdits commutateurs de puissance commandables primaires dans le cas de temps de conduction quasiment égaux ; et
une diode configurée pour commander et assurer une activation dudit commutateur de puissance primaire commandable et pour commander et assurer une activation dudit commutateur commandable.

20. Procédé selon la revendication 19, dans lequel ledit au moins un commutateur commandable est disposé physiquement près desdits premier et deuxième commutateurs de puissance commandables primaires de sorte que le déplacement dudit au moins un commutateur commandable de façon plus proche desdits premier et deuxième commutateurs de puissance commandables primaires ne réduirait pas substantiellement le temps de coupure des commutateurs primaires.

21. Procédé selon la revendication 16, dans lequel chaque dit circuit de commande de redresseur synchrone comporte de plus :
au moins un circuit logique à deux entrées commandant la conduction de chaque dit redresseur synchrone avec une capacité d'entrée relativement faible de sorte que l'inductance de fuite dudit quatrième enroulement de transformateur ne compromette pas le retard dans la coupure dudit redresseur synchrone, où une entrée dudit circuit logique à deux entrées est raccordée à une extrémité dudit enroulement de transformateur d'entraînement raccordé auxdits circuits de commande de redresseur synchrone, et la deuxième entrée dudit circuit logique à deux entrées est raccordée au redresseur synchrone correspondant afin d'empêcher une activation dudit redresseur synchrone avant qu'une tension à travers ledit redresseur synchrone ne chute à une valeur prédéterminée ; et
un circuit d'excitation raccordé audit chaque redresseur synchrone assurant une activation optimale dudit redresseur synchrone et fournissant une coupure optimale dudit redresseur synchrone avec un retard minimal.

22. Procédé selon la revendication 21, dans lequel ledit circuit logique à deux entrées comporte des diodes de protection sur chacune desdites deux entrées fournissant une tension négative ou positive supérieure à une tension d'alimentation à appliquer aux bornes de chaque dite entrée dudit circuit logique à deux entrées.

23. Procédé selon la revendication 22, dans lequel ledit circuit logique à deux entrées comporte de plus des résistances en série dans chacune desdites deux entrées limitant un courant dans lesdites diodes de protection à chaque fois qu'une tension négative ou positive supérieure à une tension d'alimentation est appliquée aux bornes de chaque dite entrée dudit circuit logique à deux entrées.

24. Procédé selon la revendication 16, dans lequel ledit circuit de commande de conduction de commutateur a pour référence ladite sortie dudit transformateur d'isolation de puissance, permettant de la sorte audit quatrième enroulement de transformateur d'entraînement, raccordé auxdits circuits de commande de redresseur synchrone, et audit premier enroulement de transformateur d'entraînement, raccordé audit circuit de commande de conduction de commutateur avec deux entrées ayant un décalage d'environ 180°, d'être combinés, éliminant de la sorte un enroulement dans ledit transformateur d'entraînement.

25. Procédé selon la revendication 24, dans lequel ledit circuit de commande de conduction de commutateur est raccordé auxdits circuits de commande de redresseur synchrone.

26. Procédé selon la revendication 17, comprenant de plus un moyen pour désactiver le convertisseur de puissance sur le côté d'entrée et ainsi le côté de sortie également à partir d'une condition détectée sur le côté de sortie.

27. Procédé selon la revendication 17, et comprenant de plus une activation du convertisseur de puissance sur le côté d'entrée à partir d'une condition détectée sur le côté de sortie.

28. Procédé selon la revendication 25, comprenant de plus une désactivation du convertisseur de puissance à mode commuté à partir de la sortie dudit convertisseur de puissance à mode commuté en réponse à une condition détectée sur le côté d'entrée dudit convertisseur de puissance à mode commuté.
